# EUROPEAN PATENT SPECIFICATION

(11) **EP 4 145 051 B1**
(45) Date of publication and mention of the grant of the patent: **03.07.2024**
(21) Application number: 21846871.8
(22) Date of filing: 20.07.2021
(51) Int. Cl.: H05H 1/24, F24F 3/16, B01D 53/74

(54) **PLASMA GENERATOR AND PLASMA TREATMENT SYSTEM**
PLASMAGENERATOR UND PLASMABEHANDLUNGSSYSTEM
GÉNÉRATEUR DE PLASMA ET SYSTÈME DE TRAITEMENT AU PLASMA

(30) Priority: 22.07.2020 CN 202010713290; 18.08.2020 CN 202010830627
(43) Date of publication of application: 08.03.2023
(73) Proprietor: Fermion Instruments (Shanghai) Co., Ltd., Shanghai 201906 (CN)
(72) Inventor: XIE, Binping, Shanghai 201906 (CN); WEI, Caiyi, Shanghai 201906 (CN); FANG, Yanbian, Shanghai 201906 (CN); WANG, Liang, Shanghai 201906 (CN); GUAN, Jiayue, Shanghai 201906 (CN)
(74) Representative: Bayramoglu et al.
(86) International application number: PCT/CN2021/107227
(87) International publication number: WO 2022/017340

(56) References cited:
- EP-A1- 3 346 560
- WO-A1-2014/094512
- CN-A- 105 921 007
- CN-A- 107 360 659
- CN-A- 109 323 343
- CN-A- 111 425 964
- CN-A- 111 878 920
- CN-A- 111 940 411
- CN-U- 203 787 769
- CN-U- 203 850 621
- CN-U- 204 179 490
- CN-U- 206 658 325
- CN-U- 212 577 035
- CN-Y- 2 712 445
- CN-Y- 2 712 445
- JP-A- 2007 330 291
- JP-A- 2011 129 351
- JP-A- 2013 073 886
- JP-B2- 5 262 752
- US-A1- 2020 161 839

## Description

### TECHNICAL FIELD

The present disclosure relates to the field of plasma and in particular to a plasma generator and a plasma treatment system.

### BACKGROUND

Plasma has been widely applied to many fields. For example, low-temperature plasma has a broad application prospect in sterilization, disinfection, or odor removal.

At present, the most common plasma generating products on markets obtain plasma by dielectric barrier discharge (DBD) and corona discharge using needle tips, sawtooth electrodes and filaments. For example, the patent GB 2524009 discloses a plasma air purifier using DBD. The DBD is defective in the following aspects: Ions generated are mainly distributed on a surface of a discharge electrode. The effective reaction volume between air and a plasma field is small. The sterilization efficiency is low. The ionization requires high energy. While plasma and free radicals are generated, harmful by-products, such as ozone, ultraviolet rays, or oxynitrides, are still released.

A plasma generator using a needle tip or sawtooth discharge electrode has a small coverage area and a low plasma concentration because plasma is excited only in a corona region near a needle tip. After being used for a period of time, the discharge tip is passivated due to a sputtering effect, which results in the reduced efficiency of plasma generation. To obtain enough positive and negative ions by this way, there is a need to increase the voltage, which would lead to a risk of spark breakdown and releases harmful by-products such as ozone, ultraviolet rays, or oxynitrides. A plasma generator using a filament electrode has higher efficiency than those using the needle tip and sawtooth electrodes, but the filament is burnt out easily, and the electrode structure where the filament is integrated with a plate is prone to dust accumulation and hard to clean.

In addition, with regard to existing plasma air purifying products, plasma generators are usually fixed at an air outlet, which release positive and negative ions into a room to purify the air. However, due to a low ion concentration in the room, the sterilization rate is low, the sterilization effect is undesirable, and the risk of pathogen transmission is increased.

As described above, existing plasma technologies have many problems, such as harmful by-products, low ion concentration, low sterilization efficiency, and difficulty in cleaning. Furthermore, most air sterilizing and purifiers achieve the optimal effect in combination with many purification technologies. Hence, air resistances generated accumulatively by each purification layer have a significant impact on energy consumption and efficiency of the whole device.

EP3346560 discloses an example of a bipolar ionisation generator for air purification, where the ion releasers are supported by brackets.

### SUMMARY

The invention discloses a plasma generator according to claim 1 and a plasma treatment system according to claim 8.

Preferred embodiments are disclosed in the dependent claims.

### BRIEF DESCRIPTION OF THE DRAWINGS

To describe the technical solutions of the embodiments of the present disclosure more clearly, accompanying drawings of the embodiments will be briefly introduced below. It is to be understood that these drawings are merely for example, rather than any limitation to the embodiments of the present disclosure.
FIG. 1 is a structural view illustrating a plasma generator according to an embodiment of the present disclosure.
FIG. 2 is a schematic view illustrating a working principle of a plasma generator according to an embodiment of the present disclosure.
FIG. 3 is a curve graph illustrating the high-voltage discharge of an electrode of a plasma generator according to an embodiment of the present disclosure.
FIG. 4 is a structural view illustrating a plasma treatment system according to an embodiment of the present disclosure.
FIG. 5 is a structural view illustrating another plasma generator according to an embodiment of the present disclosure.
FIG. 6 is a structural view illustrating an ion releaser array according to an embodiment of the present disclosure.
FIG. 7 is a structural view illustrating another plasma generator according to an embodiment of the present disclosure.
FIG. 8 is a structural view illustrating another plasma treatment system according to an embodiment of the present disclosure.
FIG. 9 is a sectional view illustrating another plasma treatment system according to an embodiment of the present disclosure.
FIG. 10 is a structural view illustrating another plasma treatment system according to an embodiment of the present disclosure.
FIG. 11 is a structural view illustrating another plasma treatment system according to an embodiment of the present disclosure.

### Reference numerals:

100, 500, and 700: plasma generator
300: curve graph of high-voltage discharge
400, 800, 900, 1000, and 1100: plasma treatment system
101, 401, 501, 601, 701, 801, 901, 1001, and 1101: positive ion releaser array
1011, 5011, 6011, 7011, and 10011: positive ion releaser
102, 402, 502, 602, 702, 802, 902, 1002, and 1102: negative ion releaser array
1021, 5021, 6021, 7021, and 10021: negative ion releaser
103, and 703: power supply or power interface
110: gas
120, 420, 820, 920, 1020, and 1120: plasma treatment region
404, 504, and 604: base
410, 810, 910, 1010, and 1110: housing
705: recess
706: housing
830, 1030, and 1130: gas driver
811, 1011, and 1111: gas inlet
812, 1012, and 1112: gas outlet
870, 1070, and 1170: gas channel
1140, 1140a, and 1140b: filter
1150: chemical treatment device
1160: dust collector

### DETAILED DESCRIPTION OF THE EMBODIMENTS

Some embodiments of the present disclosure will be described below with reference to the drawings. The described embodiments are merely exemplary, rather than all of the embodiments of the present disclosure.

It should be noted that in the description of the present disclosure, the terms such as "center", "upper", "lower", "left", "right", "vertical", "horizontal", "inner", "outer", "top" and "bottom" indicate the orientation or position relationships based on the drawings. These terms are merely intended to facilitate the description of the present disclosure and simplify the description, rather than to indicate or imply that the mentioned apparatus or element must have a specific orientation and must be constructed and operated in a specific orientation. Therefore, these terms should not be construed as a limitation to the present disclosure. Moreover, terms such as "first" and "second" are merely intended for the purpose of description and should not be construed as indicating or implying relative importance. In the description of the present disclosure, it should be noted that, unless otherwise clearly specified, meanings of the terms "install", "connected with", "connected to", and "coupled to" should be understood in a broad sense. For example, the connection may be a fixed connection or a removable connection; it may be a mechanical connection or an electrical connection; it may be a direct connection or an indirect connection by using an intermediate medium; or it may be intercommunication between two components. Those of ordinary skill in the art may understand specific meanings of the foregoing terms in the present disclosure based on a specific situation.

It is to be understood by those skilled in the art that the embodiments of the present disclosure can be widely applied to various fields. In the description of the present disclosure, the example of the air purification field is merely for simple and clear description, rather than as a limitation to the embodiments of the present disclosure. Conversely, the embodiments of the present disclosure can be applied to other fields such as cold-chain logistics and fresh food processing.

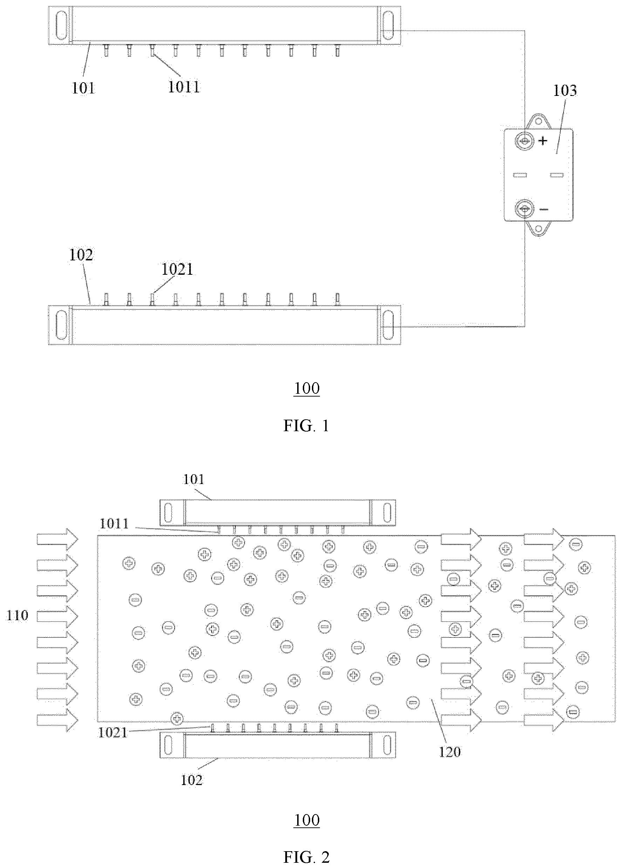

FIG. 1 is a structural view illustrating plasma generator 100 according to an embodiment of the present disclosure. As shown in FIG. 1, the plasma generator 100 may include positive ion releaser array 101 and negative ion releaser array 102. The positive ion releaser array 101 may include a plurality of positive ion releasers 1011. The plurality of positive ion releasers 1011 may be formed into a one-dimensional (1D), two-dimensional (2D), or three-dimensional (3D) array. Similarly, the negative ion releaser array 102 may include a plurality of negative ion releasers 1021. The plurality of negative ion releasers 1021 may be formed into a 1D, 2D, or 3D array. The positive ion releasers 1011 and/or negative ion releasers 1021 each may include a micro/nano conductive fiber cluster. The micro/nano conductive fiber cluster may include various suitable materials, such as one or more of a carbon fiber, a graphite fiber, a metal fiber, a short tungsten filament, a carbon fiber doped polypropylene, and a polyethylene filament. In some embodiments, the micro/nano conductive fiber cluster may include a micro/nanofiber having a diameter in a range between 10 nm and 100 µm. In some embodiments, the micro/nano conductive fiber cluster may include a micro/nanofiber having a number in the range between 1,000 and 100,000.

In some embodiments, the plasma generator 100 may further include a power supply or power interface (such as a plug or binding post) 103. The power supply or power interface 103 includes a positive terminal connected to the positive ion releaser array 101 and a negative terminal connected to the negative ion releaser array 102 to supply power to the positive ion releaser array 101 and the negative ion releaser array 102. In some embodiments, the power supply or power interface 103 may include a battery such as a rechargeable battery. In some embodiments, the power supply or power interface 103 may include a transformer configured to convert a voltage of the battery or an external power supply into a voltage for driving the positive ion releaser array 101 and the negative ion releaser array 102. In some embodiments, the power supply or power interface 103 may provide a high-voltage constant current power supply, for example, having a voltage of greater than 2,000 V to supply power to the positive ion releaser array 101 and the negative ion releaser array 102, thereby effectively exciting plasma.

FIG. 2 is a schematic view illustrating a working principle of plasma generator 100 according to an embodiment of the present disclosure. When the power supply or power interface 103 supplies power to the positive ion releaser array 101 and the negative ion releaser array 102, the positive ion releasers 1011 and the negative ion releasers 1021 are excited to release positive ions and negative ions, respectively. For example, the micro/nano conductive fiber clusters of the positive ion releasers 1011 are excited to release positive ions while the micro/nano conductive fiber clusters of the negative ion releasers 1021 are excited to release negative ions.

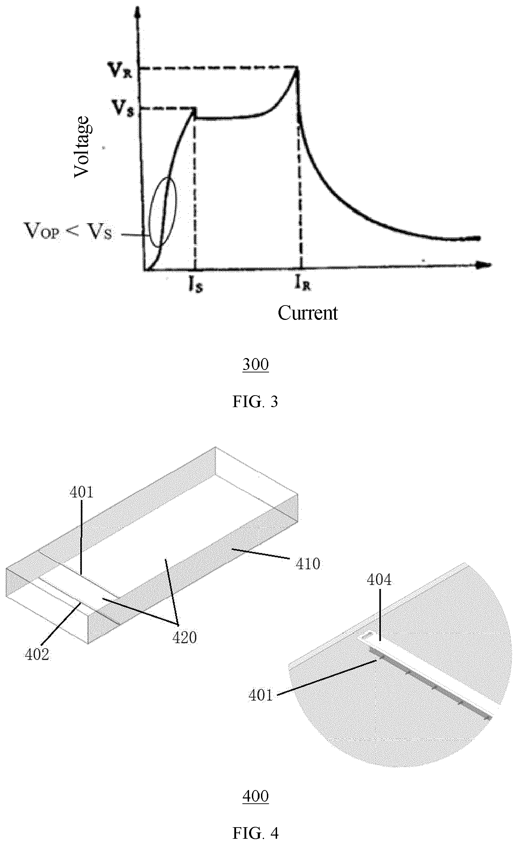

FIG. 3 is curve graph 300 illustrating the high-voltage discharge of an electrode of a plasma generator according to an embodiment of the present disclosure. It is to be understood by those skilled in the art that the curve graph 300 of the high-voltage discharge of the electrode is exemplary rather than restrictive and is intended to schematically illustrate an ion release principle of the plasma generator of the present disclosure and the plasma generator in the prior art. As shown in FIG. 3, when the electrode has a voltage V of less than a threshold Vs, the current increases slowly as the voltage rises. The threshold Vs refers to an initial voltage of corona discharge. When the voltage V is greater than the threshold Vs, the corona discharge occurs, resulting in the current increasing quickly from a discharge current Is as the voltage rises. When the voltage V reaches a breakdown voltage V_{R}, the electrode of the plasma generator is broken down, and instead of the corona discharge, spark discharge occurs, resulting in the voltage dropping quickly, and the current also decreases quickly from a breakdown current I_{R}.

To obtain enough ion concentration and prevent spark discharge in the conventional art, both DBD and single tip discharge are performed under the condition where the voltage is greater than the threshold Vs but not greater than the breakdown voltage V_{R}. At the voltage of the corona discharge, the DBD and the single tip discharge form by-products such as ultraviolet rays, ozone, and oxynitrides while ionizing a gas. In addition, even with the high voltage, the DBD plate electrode and the single needle-tip electrode still have low discharge efficiency.

However, in the embodiment of the present disclosure, the ion releasers each may include the micro/nano conductive fiber cluster, which includes a large number (such as 1,000-100,000 pieces) of micro/nanofibers to form a large number of discharge tips. At the same voltage, the micro/nano conductive fiber cluster has a higher ion-generating efficiency than the single needle-tip electrode or the DBD plate electrode. Since the micro/nano conductive fiber cluster forms the tip discharge through a large number of fibers, there are enough discharge channels to obtain a higher ion-generating efficiency. Moreover, in the embodiment of the present disclosure, as shown in FIG. 3, the ion releasers can work at a voltage V_{OP} lower than the threshold V_{S} of the corona discharge and can still stably release high concentration ions. In this way, due to excessive voltage, harmful by-products such as ultraviolet rays, ozone, and oxynitrides can be relieved or even prevented, thereby being more environment-friendly and safer.

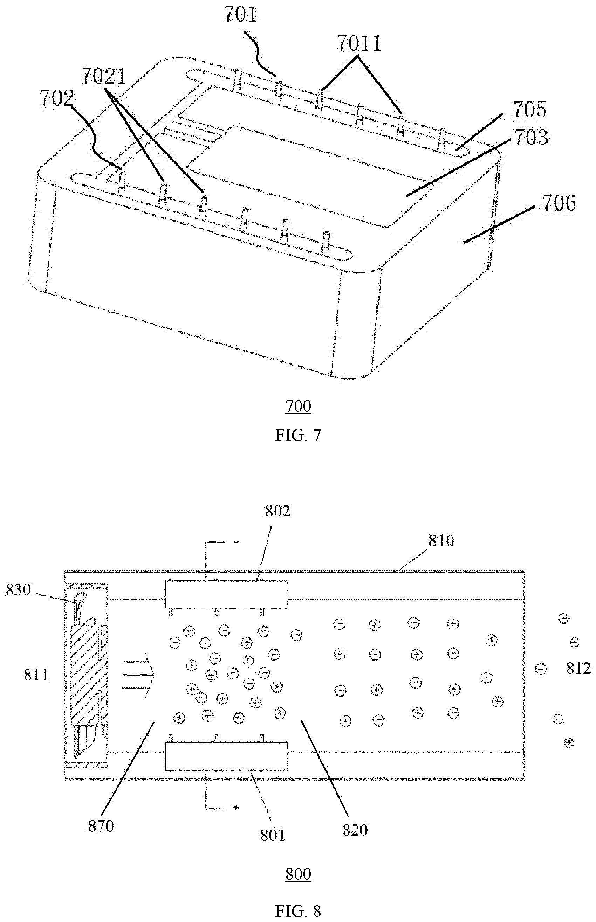

In addition, in some embodiments, the power supply (for example, the power supply or power interface 103 in FIG. 1, and the power supply or power interface 703 in FIG. 7) may be a high-voltage constant current power supply (for example, having a voltage of 2,000 V), such that the ion releaser arrays are effectively excited while working at a constant current mode, thereby keeping the ion concentration efficient and stable.

As shown in FIG. 2, the positive ion releasers 1011 of the positive ion releaser array 101 generate a large number of positive ions while the negative ion releasers 1021 of the negative ion releaser array 102 generate a large number of negative ions. The positive and negative ions are released to the plasma treatment region 120 and mixed to form high concentration plasma, for example, an average ion concentration may not be less than 10⁷/cm³. For example, under the action of a coulomb force in the plasma treatment region 120, the positive ions move toward the negative ion releaser array 102 while the negative ions move toward the positive ion releaser array 101. In some embodiments, gas 110 may flow through the plasma treatment region 120. As shown in FIG. 2, under the action of driving by the gas 110, the positive and negative ions may move in the plasma treatment region 120 for mixing. The gas 110 may include air, nitrogen, or other gases.

In the plasma treatment region 120, a target object may be treated with plasma. For example, the gas 110 may enter the plasma treatment region 120, and the plasma may sterilize and disinfect the gas 110, such as sterilizing and disinfecting viruses and bacteria in the air. The target object may further include a medical appliance, fresh food, etc.

As shown in FIG. 2, the positive ion releaser array 101 and the negative ion releaser array 102 may be positioned opposite from each other. For example, discharge tips of the positive ion releasers 1011 on the positive ion releaser array 101 may be opposite to the discharge tips of the negative ion releasers 1021 on the negative ion releaser array 102. The plasma treatment region 120 may be provided between the positive ion releaser array 101 and the negative ion releaser array 102. In some embodiments, the distance between the positive ion releaser array 101 and the negative ion releaser array 102 may fall within the range between 40 mm and 1,500 mm.

In some embodiments, the positive ion releaser array 101 and the negative ion releaser array 102 may be arranged in other manners, such as at least one of the following arrangements: a side-by-side arrangement, an alternate arrangement, a staggered arrangement, an angular arrangement, a reverse arrangement, or a stacked arrangement. The angular arrangement refers to the orientations in the normal directions of the positive ion releaser array 101 and the negative ion releaser array 102 formed into an included angle of greater than 0° and less than 180°. For example, the positive ion releaser array 101 and the negative ion releaser array 102 may be arranged alternately with an approximately same orientation, and the plasma treatment region 120 is formed in a direction of the orientation. The positive ion releaser array 101 and the negative ion releaser array 102 are spaced at a certain distance, which prevents early and excessive annihilation of the positive and negative ions and improves the plasma concentration in the plasma treatment region 120. The positive ion releaser array 101 and the negative ion releaser array 102 may be arranged angularly and formed into an included angle in orientation, which prevents early and excessive annihilation of the positive and negative ions.

In some embodiments, the plasma generator 100 may include a plurality of the positive ion releaser arrays 101 or a plurality of the negative ion releaser arrays 102. For example, the plurality of the positive ion releaser arrays 101 or the plurality of the negative ion releaser arrays 102 may be arranged side by side to increase the number of ions released and the volume of the plasma treatment region 120. In addition, the plurality of the positive ion releaser arrays 101 or the plurality of the negative ion releaser arrays 102 may be provided on a rugged surface side by side or alternately according to the shape of the mounting environment, and their orientations may also change with the undulation of the surface.

FIG. 4 is a structural view illustrating plasma treatment system 400 according to an embodiment of the present disclosure. As shown in FIG. 4, the plasma treatment system 400 may include housing 410, positive ion releaser array 401, negative ion releaser array 402, and plasma treatment region 420. The positive ion releaser array 401 and the negative ion releaser array 402 may be located in the housing 410. For example, the positive ion releaser array 401 may be provided on the upper inner wall of the housing 410 while the negative ion releaser array 402 may be provided on the lower inner wall of the housing 410. The positive ion releaser array 401 and the negative ion releaser array 402 may be positioned opposite from each other. It is to be understood by those skilled in the art that the positive ion releaser array 401 and the negative ion releaser array 402 may be realized by the positive ion releaser array 101 and the negative ion releaser array 102 in FIG. 1 and FIG. 2.

As shown in FIG. 4, the plasma treatment region 420 may include a space defined by the housing 410. During operation, the positive ion releaser array 401 and the negative ion releaser array 402 respectively release positive ions and negative ions to the plasma treatment region 420 to form a high concentration plasma in the plasma treatment region 420, thereby performing plasma treatment on a target object (such as a gas and a medical appliance).

In some embodiments, the positive ion releaser array 401 or the negative ion releaser array 402 may be provided on base 404. For example, as shown in FIG. 4, the positive ion releaser array 401 may include a plurality of positive ion releasers on the base 404. In some embodiments, the base 404 may include a conductive material such as a conductive metal. Micro/nano conductive fiber clusters of the plurality of positive ion releasers may be fixed on the base 404. The base 404 may be connected to a power supply (not shown) to conduct electricity to the micro/nano conductive fiber clusters. With the base 404, the supply current can be more stable, and the positive ion releaser array 401 or the negative ion releaser array 402 can be mounted and maintained more conveniently and stably, thereby further preventing harmful by-products such as ozone.

In the embodiment of the present disclosure, the positive ion releaser array or the negative ion releaser array may include a 1D, 2D, or 3D array and may have various suitable forms, such as one or more of a linear array, an arc array, a fold line array, a rectangular array, a circular array, a polygonal array, a curved surface array, and a spherical array. It is to be understood by those skilled in the art that the positive ion releaser array or the negative ion releaser array may be provided on a rugged surface according to the shape of a mounting environment, and orientations of the ion releasers in the arrays may also change with the undulation of the surface.

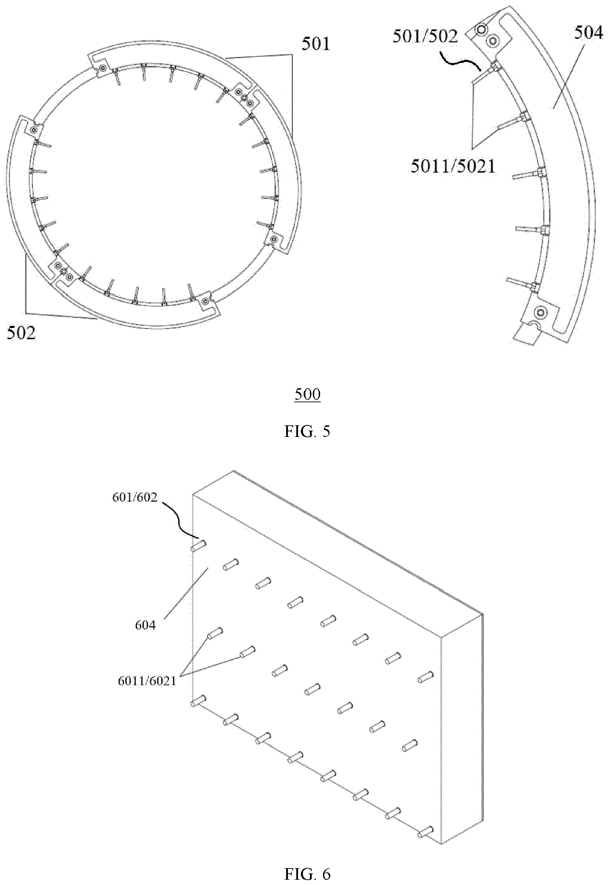

FIG. 5 is a structural view illustrating plasma generator 500 according to an embodiment of the present disclosure. As shown in FIG. 5, the plasma generator 500 may include two positive ion releaser arrays 501 and two negative ion releaser arrays 502. It is to be understood by those skilled in the art that although two positive ion releaser arrays and two negative ion releaser arrays are shown in FIG. 5, the plasma generator 500 may include more positive ion releaser arrays 501 and more negative ion releaser arrays 502. The positive ion releaser arrays 501 each are arc-shaped and may be arranged into a larger arc. Similarly, the negative ion releaser arrays 502 are also arc-shaped and may be arranged into a larger arc and formed into an approximately circular or elliptical shape with an arc arranged by a plurality of the positive ion releaser arrays 501. In some embodiments, a plurality of the positive ion releaser arrays 501 and a plurality of the negative ion releaser arrays 502 are connected to form a complete circular or elliptical structure.

The positive ion releaser arrays 501 and the negative ion releaser arrays 502 may respectively include a plurality of positive ion releasers 5011 and a plurality of negative ion releasers 5021. The positive ion releasers 5011 and the negative ion releasers 5021 may be located inside the circular or elliptical shape and may be positioned opposite from each other. In some embodiments, the positive and negative ion releaser arrays arranged into the arcs are easily arranged in a gas channel (for example, a circular ventilating duct), such as at a gas inlet, to form a larger plasma treatment region, thereby better sterilizing and disinfecting the bacteria and viruses.

In some embodiments, the positive ion releaser arrays 501 or the negative ion releaser arrays 502 may be provided on arc-shaped base 504. In addition, the base 504 may include a conductive material such as a conductive metal. Micro/nano conductive fiber clusters of the plurality of positive ion releasers 5011 or the plurality of negative ion releasers 5021 may be fixed on the base 504. The base 504 may be connected to a power supply (not shown) to conduct electricity to the micro/nano conductive fiber clusters. With the base 504, the mechanical stability and power supply stability of the positive and negative ion releaser arrays can be improved.

FIG. 6 is a structural view illustrating ion releaser array 601 or 602 according to an embodiment of the present disclosure. As shown in FIG. 6, the positive ion releaser array 601 may include a plurality of positive ion releasers 6011 or the negative ion releaser array 602 may include a plurality of negative ion releasers 6021. The plurality of positive ion releasers 6011 or the plurality of negative ion releasers 6021 may be provided on base 604 and staggered into a plurality of rows to form a staggered matrix array. With the staggered pattern, the efficiency that the ion releaser array 601 or 602 generates ions can be improved, the gas can be treated more fully in the plasma treatment region, and the effect of sterilizing and disinfecting the bacteria and viruses can be improved. In some embodiments, the base 604 may include a conductive material and may be configured to conduct electricity to micro/nano conductive fiber clusters of the plurality of positive ion releasers 6011 or the plurality of negative ion releasers 6021.

In some embodiments, the base 604 may include a plurality of recesses. The plurality of positive ion releasers 6011 or the plurality of negative ion releasers 6021 may be provided in the recesses of the base 604. The recesses each may have a tapered sidewall to conveniently release positive and negative ions outward.

FIG. 7 is a structural view illustrating plasma generator 700 according to an embodiment of the present disclosure. As shown in FIG. 7, the plasma generator 700 includes positive ion releaser array 701 and negative ion releaser array 702. The positive ion releaser array 701 includes a plurality of positive ion releasers 7011 arranged linearly. The negative ion releaser array 702 includes a plurality of negative ion releasers 7021 arranged linearly. The positive ion releaser array 701 and the negative ion releaser array 702 are parallel to each other and spaced at a certain distance. Orientations of the positive ion releasers 7011 and the negative ion releasers 7021 may be approximately the same or formed into an angle. In some embodiments, the positive ion releaser array 701 and the negative ion releaser array 702 each may include a 2D array.

As shown in FIG. 7, the plasma generator 700 further includes housing 706. The positive ion releaser array 701 and the negative ion releaser array 702 are provided on an upper surface of the housing 706, on two sides of the upper surface of the housing 706. The housing 706 includes recesses 705 in the upper surface. The plurality of positive ion releasers 7011 and the plurality of negative ion releasers 7021 are provided in the recesses 705. In some embodiments, tips of the plurality of positive ion releasers 7011 and the plurality of negative ion releasers 7021 are lower than the upper surface of the housing 706 to protect the ion releasers. The recesses 705 for the plurality of positive ion releasers 7011 or the plurality of negative ion releasers 7021 may be connected recesses and may also be independent recesses. The plasma generator 700 may further include a base (not shown), which may be provided on the upper surface of the housing 706 or in the housing 706 and configured to support the plurality of positive ion releasers 7011 and the plurality of negative ion releasers 7021 and conduct electricity to them.

As shown in FIG. 7, the plasma generator 700 includes a power supply or power interface 703 in the housing 706. A positive terminal and a negative terminal of the power supply or power interface 703 are respectively connected to the positive ion releaser array 701 and the negative ion releaser array 702. The power supply or power interface 703 may include a transformer configured to convert a power voltage into a voltage for driving the positive ion releaser array 701 and the negative ion releaser array 702.

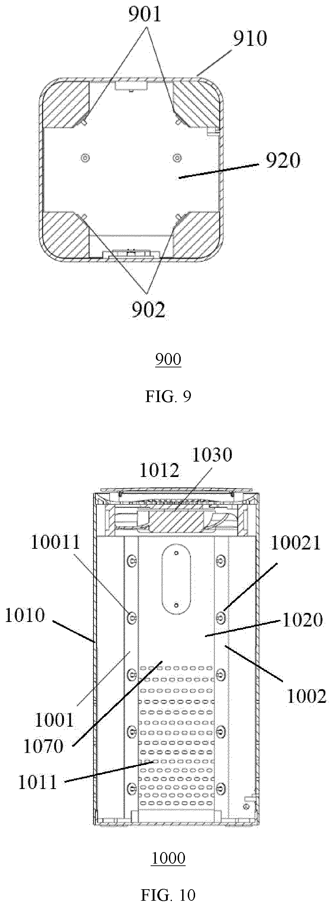

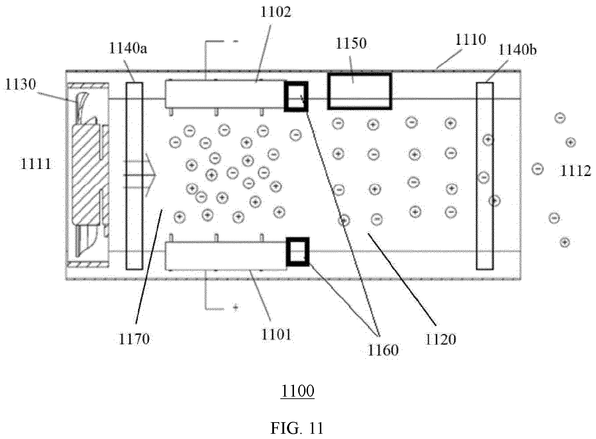

FIG. 8 is a structural view illustrating plasma treatment system 800 according to an embodiment of the present disclosure. It is to be understood by those skilled in the art that the plasma generator 100 in FIG. 1 and FIG. 2, the plasma generator 500 in FIG. 5, the plasma generator 700 in FIG. 7, the plasma treatment system 900 in FIG. 9, or the plasma treatment system 1100 in FIG. 11 can be wholly or partially applied to the plasma treatment system 800 in FIG. 8.

As shown in FIG. 8, the plasma treatment system 800 may include a plasma generator including positive ion releaser array 801 and negative ion releaser array 802. The positive ion releaser array 801 and the negative ion releaser array 802 may respectively include a plurality of positive ion releasers and a plurality of negative ion releasers. It is to be understood by those skilled in the art that although the positive ion releaser array 801 and the negative ion releaser array 802 are positioned opposite from each other in FIG. 8, the positive ion releaser array 801 and the negative ion releaser array 802 may be provided in any suitable manner. The plasma treatment system 800 may include the plasma generator according to the embodiment of the present disclosure, such as the plasma generator 100 in FIG. 1 and FIG. 2, the plasma generator 500 in FIG. 5, and the plasma generator 700 in FIG. 7.

The plasma treatment system 800 may further include plasma treatment region 820. During operation, the positive ion releaser array 801 releases positive ions to the plasma treatment region 820 while the negative ion releaser array 802 releases negative ions to the plasma treatment region 820, thereby forming a high concentration plasma atmosphere in the plasma treatment region 820 to treat target objects.

The plasma treatment system 800 may further include housing 810 configured to accommodate the positive ion releaser array 801, the negative ion releaser array 802, and the plasma treatment region 820. For example, the positive ion releaser array 801 and the negative ion releaser array 802 may be provided on an inner wall of the housing 810. In some embodiments, the housing 810 of the plasma treatment system 800 is a component or building of another device, such as a ventilating duct, a sealed chamber, and a room.

In some embodiments, the plasma treatment system 800 may include gas channel 870 in the housing 810, which is provided with gas inlet 811 and gas outlet 812. The plasma treatment system 800 may further include gas driver 830, such as one or more blowers or fans. The gas driver 830 may be provided at the inlet 811, in the gas channel 870, or at the outlet 812. The plasma generator (for example, the positive ion releaser array 801 and the negative ion releaser array 802) may be provided in the gas channel 870 or communicated with the gas channel 870. At least a part of the plasma treatment region 820 may also be located in the gas channel 870. Under the action of driving by the gas driver 830, gas may flow into the housing 810 through the inlet 811, enter the plasma treatment region 820, and flow out of the outlet 812. A flow velocity or flow of the gas may be controlled by adjusting the power of the gas driver 830, thereby effectively treating the gas in the plasma treatment region 820.

In some embodiments, the positive ion releaser array 801 is provided at one side of the inner wall of the housing 810 while the negative ion releaser array 802 is provided at the other side of the inner wall of the housing 810. A connecting line between the positive ion releaser array 801 and the negative ion releaser array 802 is perpendicular to the lengthwise direction of the housing 810 (a transverse direction in FIG. 8). The gas driver 830 is located at the inlet of the housing 810 to drive the gas to flow between the positive ion releaser array 801 and the negative ion releaser array 802 and in parallel with the lengthwise direction of the housing 810. Orientations of the positive and negative ion releasers are positioned opposite from each other and perpendicular to the direction of the gas. In this way, the utilization rate of plasma in the plasma treatment region can be improved, and the treatment efficiency of the gas can be improved.

In some embodiments, the housing 810 is a ventilating duct of a room. During the operation of the plasma treatment system 800, the positive ion releaser array 801 and the negative ion releaser array 802 respectively release positive ions and negative ions to the plasma treatment region 820 to form high concentration ions. The gas driver 830 includes one or more blowers, which are provided at an inlet of the ventilating duct 810 to drive airflow to pass through the plasma treatment region 820. In a high concentration plasma atmosphere, the bacteria and viruses are exposed to high concentration positive and negative ions and active radicals, and sterilized and disinfected quickly. A volume of air passing through the ventilating duct 810 in unit time may be controlled by adjusting the rotational speed of the blower 830. Through cyclic ventilation, the whole room can reach a qualified environmental standard. The rotational speed of the blower 830 can be adjusted adaptively based on the size of the space to be purified. In addition, after passing through the plasma treatment region 820, the gas flows out of the outlet 812 of the ventilating duct to drive the high concentration ions in the plasma treatment region 820 to flow. Positive and negative ions that are not combined and captured are dispersed to the whole indoor space as the gas flows out of the ventilating duct 810. These dispersed positive and negative ions actively treat the indoor space again to sterilize and disinfect the bacteria and viruses. Because there is no obstacle in the plasma treatment region 820, the airflow is not obstructed additionally to pass through the plasma treatment region 820. In this way, the air resistance generated by the plasma treatment system 800 is small. Using the same power of the blower, the large air volume can be circulated, thereby being efficient and energy-saving. The plasma treatment system 800 can be applied to densely populated places with a large ventilation air volume and a high air exchange rate, such as public transport stations, hospitals, schools, or shopping malls. In addition, the plasma treatment system 800 is located in the ventilating duct 810, which suppresses the breeding of mildew and fungi in the ventilating duct 810 and prevents secondary pollution.

FIG. 9 is a sectional view illustrating plasma treatment system 900 according to an embodiment of the present disclosure. It is to be understood by those skilled in the art that FIG. 9 only shows a part of the plasma treatment system 900. The plasma treatment system 900 may include other components, such as components of the plasma treatment system (for example, the plasma treatment system 400 in FIG. 4, the plasma treatment system 800 in FIG. 8, the plasma treatment system 1000 in FIG. 10, or the plasma treatment system 1100 in FIG. 11) according to other embodiments of the present disclosure or may be combined with other embodiments of the present disclosure.

As shown in FIG. 9, the plasma treatment system 900 may include housing 910, as well as positive ion releaser array 901, negative ion releaser array 902, and plasma treatment region 920 that are arranged in the housing. In some embodiments, the housing 910 may have a rectangular cross-section. The positive ion releaser array 901 and the negative ion releaser array 902 may respectively include a plurality of positive ion releasers and a plurality of negative ion releasers that are dispersedly arranged at four corners of the rectangular housing 910. The positive and negative ion releasers may release positive and negative ions to the plasma treatment region 920 to form a plasma atmosphere to treat air. It is to be understood by those skilled in the art that the case where each corner of the housing 910 is provided with one ion releaser in FIG. 9 is merely illustrative rather than restrictive, and each corner of the housing 910 may be provided with a plurality of ion releasers (for example, along a lengthwise direction of the housing 910). The positive and negative ion releaser arrays are dispersedly provided in the plasma treatment system 900, which can flexibly adapt to an internal structure of the housing 910. In addition, a number of dispersedly provided positive and negative ion releasers can be adjusted according to a specific application condition to realize a better plasma treatment effect. When applied to ventilation of a building, the housing 910 may be a ventilating duct of the building, and the plasma treatment system 900 may be provided in the ventilating duct 910, which effectively purifies air in the building, can further effectively suppress mildew and fungi in the ventilating duct 910 of the large building, and prevent secondary pollution. The number of positive and negative ion releasers can be determined according to the length of the ventilating duct 910 and the space in the building to realize a better purification effect.

FIG. 10 is a structural view illustrating plasma treatment system 1000 according to an embodiment of the present disclosure. It is to be understood by those skilled in the art that the plasma generator 100 in FIG. 1, the plasma generator 500 in FIG. 5, the plasma generator 700 in FIG. 7, the plasma treatment system 900 in FIG. 9, or the plasma treatment system 1100 in FIG. 11 can be wholly or partially applied to the plasma treatment system 1000 in FIG. 10.

As shown in FIG. 10, the plasma treatment system 1000 may include a plasma generator including positive ion releaser array 1001 and negative ion releaser array 1002. The positive ion releaser array 1001 and the negative ion releaser array 1002 may respectively include a plurality of positive ion releasers 10011 and a plurality of negative ion releasers 10021.

The plasma treatment system 1000 may further include plasma treatment region 1020. During operation, the positive ion releaser array 1001 releases positive ions to the plasma treatment region 1020 while the negative ion releaser array 1002 releases negative ions to the plasma treatment region 1020, thereby forming a plasma atmosphere in the plasma treatment region 1020 to treat a target object.

The plasma treatment system 1000 may further include housing 1010 configured to accommodate the positive ion releaser array 1001, the negative ion releaser array 1002, and the plasma treatment region 1020. For example, the positive ion releaser array 1001 and the negative ion releaser array 1002 may be provided in the housing 1010 and are positioned opposite from each other. In some embodiments, the housing 1010 of the plasma treatment system 1000 may be a component or building of another device, such as a ventilating duct, a sealed chamber, and a room.

In some embodiments, the plasma treatment system 1000 may include gas channel 1070, which is provided with gas inlet 1011 and gas outlet 1012. The plasma treatment system 1000 may further include gas driver 1030, such as one or more blowers or fans. The plasma generator (for example, the positive ion releaser array 1001 and the negative ion releaser array 1002) may be provided in the gas channel 1070 or communicated with the gas channel 1070. At least a part of the plasma treatment region 1020 may also be located in the gas channel 1070.

As shown in FIG. 10, the inlet 1011 is located at the lower part of the plasma treatment system 1000 and may include a plurality of holes while the outlet 1012 is located on the top of the plasma treatment system 1000. The gas driver 1030 may be provided at the outlet 1012. Under the action of driving by the gas driver 1030, gas may flow into the housing 1010 through the inlet 1011, enter the plasma treatment region 1020 along the gas channel 1070, and flow out of the outlet 1012. A flow velocity or flow of the gas may be controlled by adjusting the power of the gas driver 1030, thereby effectively treating the gas in the plasma treatment region 1020. The plurality of holes of the gas inlet 1011 are formed in the lower part of the plasma treatment system 1000, which facilitates the circulation of the gas and accelerates the purification of indoor air.

FIG. 11 is a structural view illustrating plasma treatment system 1100 according to an embodiment of the present disclosure. It is to be understood by those skilled in the art that the plasma generator 100 in FIG. 1, the plasma generator 500 in FIG. 5, the plasma generator 700 in FIG. 7, the plasma treatment system 900 in FIG. 9, or the plasma treatment system 1000 in FIG. 10 can be wholly or partially applied to the plasma treatment system 1100 in FIG. 11.

As shown in FIG. 11, the plasma treatment system 1100 may include a plasma generator including positive ion releaser array 1101 and negative ion releaser array 1102. The positive ion releaser array 1101 and the negative ion releaser array 1102 may respectively include a plurality of positive ion releasers and a plurality of negative ion releasers. It is to be understood by those skilled in the art that although the positive ion releaser array 1101 and the negative ion releaser array 1102 are positioned opposite from each other in FIG. 11, the positive ion releaser array 1101 and the negative ion releaser array 1102 may be provided in any suitable manner. The plasma treatment system 1100 may include the plasma generator according to some embodiments of the present disclosure, such as the plasma generator 100 in FIG. 1 and FIG. 2, the plasma generator 500 in FIG. 5, and the plasma generator 700 in FIG. 7.

The plasma treatment system 1100 may further include plasma treatment region 1120. During operation, the positive ion releaser array 1101 releases positive ions to the plasma treatment region 1120 while the negative ion releaser array 1102 releases negative ions to the plasma treatment region 1120, thereby forming a plasma atmosphere in the plasma treatment region 1120 to treat a target object.

The plasma treatment system 1100 may further include housing 1110 configured to accommodate the positive ion releaser array 1101, the negative ion releaser array 1102, and the plasma treatment region 1120. For example, the positive ion releaser array 1101 and the negative ion releaser array 1102 may be provided on the inner wall of the housing 1110. In some embodiments, the housing 1110 of the plasma treatment system 1100 may be a component or building of another device, such as a ventilating duct, a sealed chamber, and a room.

In some embodiments, the plasma treatment system 1100 may include gas channel 1170, which is provided with gas inlet 1111 and gas outlet 1112. The plasma treatment system 1100 may further include gas driver 1130, such as one or more blowers or fans. The plasma generator (for example, the positive ion releaser array 1101 and the negative ion releaser array 1102) may be provided in the gas channel 1170 or communicated with the gas channel 1170. At least a part of the plasma treatment region 1120 may also be located in the gas channel 1170. The gas driver 1130 may be provided at the inlet 1111, in the gas channel 1170 or at the outlet 1112. Under the action of driving by the gas driver 1130, gas may flow into the housing 1110, enter the plasma treatment region 1120 along the gas channel 1170, and flow out of the outlet 1112. A flow velocity or flow of the gas may be controlled by adjusting the power of the gas driver 1130, thereby effectively treating the gas in the plasma treatment region 1120.

In some embodiments, the plasma treatment system 1100 may further include filter 1140, which may be provided at the gas inlet 1111, in the gas channel 1170 or at the gas outlet 1112. For example, the filter 1140a is provided at the inlet 1111 or the filter 1140b is provided at the outlet 1112. The filter 1140 may include a filter screen for filtering the gas.

In some embodiments, the plasma treatment system 1100 may further include chemical treatment device 1150 configured to assist plasma treatment in the plasma treatment region 1120 and perform chemical treatment on the target object. The chemical treatment device 1150 may be provided in the plasma treatment region 1120 or adjacent to the plasma treatment region. The chemical treatment device 1150 may include a chemical releaser configured to release a chemical gas and liquid (such as a sterilizing gas and a disinfectant) to the plasma treatment region 1120 to perform chemical treatment on the target object, such as sterilization and disinfection.

In some embodiments, the plasma treatment system 1100 may further include dust collector 1160, such as an electrostatic dust collector. The dust collector 1160 may be provided downstream from the positive ion releaser array 1101 and/or the negative ion releaser array 1102 and configured to collect bacteria sterilized and disinfected in the plasma treatment region 1120 and dust in the gas so as not to enter the gas again.

One or more of the filter 1140, the chemical treatment device 1150, or the dust collector 1160 may assist in the plasma treatment in the plasma treatment region 1120 to further improve the treatment effect of the plasma treatment system 1100 on the target object.

In some embodiments, the housing 410, 810, 910, 1010, 1110 or the gas channel 870, 1070, 1170 may have any shape along the lengthwise direction, such as a linear shape, a curved shape, or a fold line shape.

In some embodiments, the plasma treatment system 400, 800, 900, 1000, and 1100 may be an air purifier for plasma treatment on air. For example, the plasma treatment system 400, 800, 900, 1000, and 1100 may be an air purifier, the housing 410, 810, 910, 1010, and 1110 may be the gas channel 870, 1070, and 1170 for limiting air flowing, and the plasma treatment region 420, 820, 920, 1020, and 1120 may be defined by the housing with at least a part located in the channel 870, 1070, and 1170 for limiting the air flowing. In the embodiment applied to the building, the housing 410, 810, 910, 1010, and 1110 may be a ventilating duct (such as a duct of a ventilation system, an air conditioner, and the like). The plasma treatment system 400, 800, 900, 1000, and 1100 may not include the housing but is provided in the ventilating duct. The size and shape of the gas channel or the ventilating duct are determined by the application scenario and the space to be purified. The gas channel or the ventilating duct may be structurally designed into various forms to adapt to different mounting environments. The plasma generator and the plasma treatment system according to some embodiments of the present disclosure may be provided in the ventilating duct based on actual conditions. Because of the use of a plurality of ion releasers, a plasma atmosphere is generated in the gas channel or the ventilating duct to form the plasma treatment region, thereby sterilizing and disinfecting bacteria and viruses in the air, suppressing the breeding of various mildews and fungi, preventing secondary pollution to the air purifier, air conditioner, or ventilation system, and relieving maintenance burden. In addition, the movement track and retention time of the air in the gas channel or the ventilating duct can also be controlled by structurally changing the gas channel or the ventilating duct to achieve the desired purification effect. For example, the gas channel or the ventilating duct can be designed as a linear type, a curved type, or a fold line type, to change the flow path of the air in the gas channel or the ventilating duct. It is to be understood by those skilled in the art that any modification on the gas channel or the ventilating duct falls within the protection scope of the present disclosure.

For conventional plasma generating technologies, the generated plasma concentration is low, the microorganisms such as bacteria and viruses cannot be sterilized and disinfected effectively, and toxic by-products are generated. For technologies that blow plasma to a space using a blower or other devices to sterilize and disinfect bacteria and viruses, the existence time of the plasma in the space is short, which restricts the effect of sterilizing and disinfecting the bacteria and viruses. The plasma treatment region in some embodiments of the present disclosure treats the target object centrally with the plasma atmosphere, which significantly improves the efficiency and effect of sterilizing and disinfecting the bacteria and viruses. In some embodiments of the present disclosure, quick plasma treatment can be achieved, for example, the bacteria and viruses are sterilized and disinfected quickly. The plasma generator has a good effect, no consumables, fire resistance, water resistance, long continuous operation time, strong environmental adaptation, convenient maintenance, and easy cleaning.

In conventional art, the plasma generator obtains the plasma by corona discharge in most cases. However, the corona discharge region is only formed near electrodes, and the concentration of ions away from the electrodes decreases quickly. To expand the contact area between the corona discharge region and the air, the ion-generating efficiency is improved by providing the electrodes on the vertical surface of the vertical duct or in the middle of the duct. For example, the vertical duct is provided with a mesh electrode and a filament-honeycomb electrode, and a tubular electrode is provided in the middle of the duct. Such a manner will lead to large air resistance and make the installation and maintenance more difficult.

In the embodiments of the present disclosure, with the use of the positive and negative ion releaser arrays, the environmental adaption is strong, the occupied space is small, and the generated plasma concentration is high. The plasma generator can be fixed inside the duct to form the plasma treatment region, thereby treating the gas with small air resistance. For example, in some embodiments, the distance between the positive and negative ion releaser arrays can fall within a range between 40 mm and 1.5 m. For this, the air resistance is small, the positive and negative ions can be dispersed well with the gas, the plasma treatment region is expanded with the movement of the gas, the effect of sterilizing and disinfecting the bacteria and fungi is further enhanced, and the gas enters the indoor space with the positive and negative ions to actively disinfect and sterilize the indoor space again.

In some embodiments of the present disclosure, the plasma generator may be used independently and may also be provided in other devices for use. For example, the plasma generator is applied to the air conditioner. According to national regulations, the surface air cooler of the air conditioner has an air volume between 2.5 m/s and 3 m/s. The number, distance, arrangement, and the like of the positive ion releaser array and the negative ion releaser array can be selected according to the air volume, and thus the plasma generator has good adaptability.

In some embodiments of the present disclosure, the plasma generator can solve not only the problems of toxic by-products, low ion concentration, and insufficient sterilization in the conventional art, but also the problems of long sterilization time, low efficiency, and large air resistance of the conventional device. In some embodiments of the present disclosure, the plasma generator can quickly sterilize the bacteria, improve the air quality, prevent secondary pollution, and avoid harmful by-products.

Some embodiments of the present disclosure can be wholly or partially combined with other embodiments. For example, the plasma generator 100 in FIG. 1, the plasma generator 500 in FIG. 5, or the plasma generator 700 in FIG. 7 can be wholly or partially applied to the plasma treatment system 400 in FIG. 4, the plasma treatment system 800 in FIG. 8, the plasma treatment system 900 in FIG. 9, the plasma treatment system 1000 in FIG. 10, or the plasma treatment system 1100 in FIG. 11. Also, for example, the ion releaser array in FIG. 6 can be applied to the plasma generator and the plasma treatment system according to some embodiments of the present disclosure.

The scope of the invention is defined by the claims.

## Claims

1. A plasma generator, comprising:
at least one positive ion releaser array (701) comprising a plurality of positive ion releasers (7011) for releasing positive ions, and
at least one negative ion releaser array (702) comprising a plurality of negative ion releasers (7021) for releasing negative ions
**characterized in that**
the plasma generator comprises a housing (706), wherein the positive ion releaser array (701) and the negative ion releaser array (702) are arranged linearly on an upper surface of the housing (706), along two sides of the upper surface of the housing (706), respectively such that the positive ion releaser (701) and the negative ion releaser array (702) are parallel to each other and spaced at a certain distance,
wherein the plasma generator comprises recesses (705) in the upper surface of the housing (706), wherein the positive ion releaser array (701) comprising the plurality of positive ion releasers (7011) and the negative ion releaser array (702) comprising the plurality of negative ion releasers (7021) are arranged in the recesses (705) respectively and
wherein the plasma generator comprises a power supply or power interface (703) provided in the housing (706), wherein the power supply or power interface (703) comprises a positive terminal connected to the positive ion releaser array (701), and a negative terminal connected to the negative ion releaser array (702).

2. The plasma generator according to claim 1, wherein
the positive ion releasers (7011) each comprise a micro/nano conductive fiber cluster; and the negative ion releasers (7021) each comprise a micro/nano conductive fiber cluster.

3. The plasma generator according to claim 2, wherein the micro/nano conductive fiber cluster comprises at least one of:
one or more of a carbon fiber, a graphite fiber, a metal fiber, a short tungsten filament, carbon fiber doped polypropylene and a polyethylene filament;
a micro/nanofiber having a number in a range between 1,000 and 100,000; or
a micro/nanofiber having a diameter in a range between 10 nm and 100 µm.

4. The plasma generator according to claim 1, wherein
the positive ion releaser array (701) comprises a one-dimensional (1D), two-dimensional (2D) or three-dimensional (3D) positive ion releaser array; or
the negative ion releaser array (702) comprises a 1D, 2D or 3D negative ion releaser array.

5. The plasma generator according to claim 1, wherein
the positive ion releaser array (701) comprises one or more of a linear array, an arc array, a fold line array, a rectangular array, a circular array, a polygonal array, a curved surface array, and a spherical array; or
the negative ion releaser array (702) comprises one or more of a linear array, an arc array, a fold line array, a rectangular array, a circular array, a polygonal array, a curved surface array, and a spherical array.

6. The plasma generator according to claim 1, wherein the positive ion releaser array (701) and the negative ion releaser array (702) are arranged in at least one of:
a side-by-side arrangement, an alternate arrangement, a staggered arrangement, an angular arrangement, an opposite arrangement, a reverse arrangement or a stacked arrangement.

7. The plasma generator according to claim 1, wherein further comprising a base (404, 504, 604) configured to support the positive ion releaser array (401, 501, 601) or the negative ion releaser array (402, 502, 602) and conduct electricity to the positive ion releaser array (401, 501, 601) or the negative ion releaser array (402, 502, 602).

8. A plasma treatment system, comprising
at least one plasma generator according to any one of claims 1 to 7; and
a plasma treatment region (420, 820, 920, 1020, 1120), wherein the positive ion releaser array (401, 801, 901, 1001, 1101) is configured to release the positive ions to the plasma treatment region (420, 820, 920, 1020, 1120), and the negative ion releaser array (402, 802, 902, 1002, 1102) is configured to release the negative ions to the plasma treatment region (420, 820, 920, 1020, 1120).

9. The plasma treatment system according to claim 8, further comprising
a gas channel (870, 1070, 1170) comprising a gas inlet (811, 1011, 1111) and a gas outlet (812, 1012, 1112), wherein at least a part of the plasma treatment region (820, 1020, 1120) is located in the gas channel (870, 1070, 1170); and
a gas driver (830, 1030, 1130) provided at the gas inlet (811, 1011, 1111), at the gas outlet (812, 1012, 1112) or in the gas channel (870, 1070, 1170), and configured to drive a gas to enter the plasma treatment region (820, 1020, 1120).

10. The plasma treatment system according to claim 9, wherein the at least one plasma generator is provided in the gas channel (870, 1070, 1170) or communicates with the gas channel (870, 1070, 1170),
the plasma treatment system further comprises a housing (810, 1010, 1110), wherein the housing (810, 1010, 1110) defines the gas channel (870, 1070, 1170), the positive ion releaser array (801, 1001, 1101) is provided in the housing (810, 1010, 1110) and at one side of the gas channel (870, 1070, 1170), and the negative ion releaser array (802, 1002, 1102) is provided in the housing (810, 1010, 1110) and at the other side of the gas channel (870, 1070, 1170) opposite to the positive ion releaser array (801, 1001, 1101).

11. The plasma treatment system according to claim 8, further comprising at least one of:
at least one filter (1140) provided at a gas inlet (1111), in a gas channel (1170) or at a gas outlet (1112);
at least one dust collector (1160) provided at a downstream from the plasma generator; or
a chemical treatment device (1150) configured to perform chemical treatment on a gas in the gas channel (1170).

12. The plasma treatment system according to claim 8, wherein the plasma treatment region (420, 820, 920, 1020, 1120) comprises an average ion concentration of no less than 10⁷/cm³.

## Patentansprüche

1. Ein Plasmagenerator, umfassend:
mindestens ein positives Ionenfreisetzer-Array (701) mit einer Vielzahl von positiven Ionenfreisetzern (7011) zur Freisetzung positiver Ionen, und
mindestens ein negatives Ionenfreisetzer-Array (702) mit einer Vielzahl von negativen Ionenfreisetzern (7021) zur Freisetzung negativer Ionen,
**dadurch gekennzeichnet, dass**
der Plasmagenerator ein Gehäuse (706) umfasst, wobei das positive Ionenfreisetzer-Array (701) und das negative Ionenfreisetzer-Array (702) linear auf einer Oberseite des Gehäuses (706) entlang beider Seiten der Oberseite des Gehäuses (706) angeordnet sind, sodass das positive Ionenfreisetzer-Array (701) und das negative Ionenfreisetzer-Array (702) parallel zueinander und in einem bestimmten Abstand zueinander angeordnet sind,
wobei der Plasmagenerator Vertiefungen (705) in der Oberseite des Gehäuses (706) umfasst, wobei das positive Ionenfreisetzer-Array (701) mit der Vielzahl von positiven Ionenfreisetzern (7011) und das negative Ionenfreisetzer-Array (702) mit der Vielzahl von negativen Ionenfreisetzern (7021) jeweils in den Vertiefungen (705) angeordnet sind und
wobei der Plasmagenerator eine Stromversorgung oder eine Stromschnittstelle (703) im Gehäuse (706) umfasst, wobei die Stromversorgung oder die Stromschnittstelle (703) einen positiven Anschluss, der mit dem positiven Ionenfreisetzer-Array (701) verbunden ist, und einen negativen Anschluss, der mit dem negativen Ionenfreisetzer-Array (702) verbunden ist, umfasst.

2. Der Plasmagenerator nach Anspruch 1, wobei
die positiven Ionenfreisetzter (7011) jeweils eine Mikro-/Nanoleitfasergruppe umfassen; und
die negativen Ionenfreisetzter (7021) jeweils eine Mikro-/Nanoleitfasergruppe umfassen.

3. Der Plasmagenerator nach Anspruch 2, wobei die Mikro-/Nanoleitfasergruppe mindestens eine der folgenden umfasst:
eine oder mehrere von eine Kohlefaser, eine Graphitfaser, eine Metallfaser, einen kurzen Wolframfaden, mit Kohlefaser dotiertes Polypropylen und einen Polyethylenfaden;
eine Mikro-/Nanofaser mit einer Anzahl in einem Bereich zwischen 1.000 und 100.000; oder
eine Mikro-/Nanofaser mit einem Durchmesser in einem Bereich zwischen 10 nm und 100 µm.

4. Der Plasmagenerator nach Anspruch 1, wobei
das positive Ionenfreisetzer-Array (701) ein eindimensionales (1D), zweidimensionales (2D) oder dreidimensionales (3D) positives Ionenfreisetzer-Array umfasst; oder
das negative Ionenfreisetzer-Array (702) ein 1D, 2D oder 3D negatives Ionenfreisetzer-Array umfasst.

5. Der Plasmagenerator nach Anspruch 1, wobei
das positive Ionenfreisetzer-Array (701) ein oder mehrere der folgenden umfasst: ein lineares Array, ein Bogen-Array, ein Faltlinie-Array, ein rechteckiges Array, ein Kreis-Array, ein Polygon-Array, ein Krümmung-Array und ein kugelförmiges Array; oder
das negative Ionenfreisetzer-Array (702) ein oder mehrere der folgenden umfasst: ein lineares Array, ein Bogen-Array, ein Faltlinie-Array, ein rechteckiges Array, ein Kreis-Array, ein Polygon-Array, ein Krümmung-Array und ein kugelförmiges Array.

6. Der Plasmagenerator nach Anspruch 1, wobei das positive Ionenfreisetzer-Array (701) und das negative Ionenfreisetzer-Array (702) in mindestens einer der folgenden Anordnungen angeordnet sind:
einer nebeneinanderliegenden Anordnung, einer alternierenden Anordnung, einer gestaffelten Anordnung, einer Winkelanordnung, einer gegenüberliegenden Anordnung, einer umgekehrten Anordnung oder einer gestapelten Anordnung.

7. Der Plasmagenerator nach Anspruch 1, wobei ferner eine Basis (404, 504, 604) umfasst ist, die konfiguriert ist, das positive Ionenfreisetzer-Array (401, 501, 601) oder das negative Ionenfreisetzer-Array (402, 502, 602) zu stützen und Elektrizität zum positiven Ionenfreisetzer-Array (401, 501, 601) oder zum negativen Ionenfreisetzer-Array (402, 502, 602) zu leiten.

8. Ein Plasmabehandlungssystem, umfassend:
mindestens einen Plasmagenerator nach einem der Ansprüche 1 bis 7; und
einen Plasmabehandlungsbereich (420, 820, 920, 1020, 1120), wobei das positive Ionenfreisetzer-Array (401, 801, 901, 1001, 1101) konfiguriert ist, die positiven Ionen in den Plasmabehandlungsbereich (420, 820, 920, 1020, 1120) freizusetzen, und das negative Ionenfreisetzer-Array (402, 802, 902, 1002, 1102) konfiguriert ist, die negativen Ionen in den Plasmabehandlungsbereich (420, 820, 920, 1020, 1120) freizusetzen.

9. Das Plasmabehandlungssystem nach Anspruch 8, weiter umfassend:
einen Gaskanal (870, 1070, 1170) mit einem Gaseinlass (811, 1011, 1111) und einem Gasauslass (812, 1012, 1112), wobei mindestens ein Teil des Plasmabehandlungsbereichs (820, 1020, 1120) im Gaskanal (870, 1070, 1170) liegt; und
einen Gasantrieb (830, 1030, 1130), der am Gaseinlass (811, 1011, 1111), am Gasauslass (812, 1012, 1112) oder im Gaskanal (870, 1070, 1170) vorgesehen ist und konfiguriert ist, ein Gas in den Plasmabehandlungsbereich (820, 1020, 1120) zu leiten.

10. Das Plasmabehandlungssystem nach Anspruch 9, wobei der mindestens ein Plasmagenerator im Gaskanal (870, 1070, 1170) vorgesehen ist oder mit dem Gaskanal (870, 1070, 1170) kommuniziert, und
das Plasmabehandlungssystem ferner ein Gehäuse (810, 1010, 1110) umfasst, wobei das Gehäuse (810, 1010, 1110) den Gaskanal (870, 1070, 1170) definiert, das positive Ionenfreisetzer-Array (801, 1001, 1101) im Gehäuse (810, 1010, 1110) und an einer Seite des Gaskanals (870, 1070, 1170) vorgesehen ist, und das negative Ionenfreisetzer-Array (802, 1002, 1102) im Gehäuse (810, 1010, 1110) und an der anderen Seite des Gaskanals (870, 1070, 1170) gegenüber dem positiven Ionenfreisetzer-Array (801, 1001, 1101) vorgesehen ist.

11. Das Plasmabehandlungssystem nach Anspruch 8, weiter umfassend mindestens einen der folgenden:
mindestens einen Filter (1140) am Gaseinlass (1111), im Gaskanal (1170) oder am Gasauslass (1112);
mindestens einen Staubsammler (1160), der stromabwärts vom Plasmagenerator bereitgestellt ist; oder
eine chemische Behandlungsvorrichtung (1150), die konfiguriert ist, eine chemische Behandlung eines Gases im Gaskanal (1170) durchzuführen.

12. Das Plasmabehandlungssystem nach Anspruch 8, wobei der Plasmabehandlungsbereich (420, 820, 920, 1020, 1120) eine durchschnittliche Ionenkonzentration von nicht weniger als 10⁷/cm³ aufweist.

## Revendications

1. Un générateur de plasma, comprenant:
au moins une matrice de libérateurs d'ions positifs (701) comprenant une pluralité de libérateurs d'ions positifs (7011) pour libérer des ions positifs, et
au moins une matrice de libérateurs d'ions négatifs (702) comprenant une pluralité de libérateurs d'ions négatifs (7021) pour libérer des ions négatifs,
**caractérisé en ce que**
le générateur de plasma comprend un boîtier (706), dans lequel la matrice de libérateurs d'ions positifs (701) et la matrice de libérateurs d'ions négatifs (702) sont disposées linéairement sur une surface supérieure du boîtier (706), le long des deux côtés de la surface supérieure du boîtier (706), de sorte que la matrice de libérateurs d'ions positifs (701) et la matrice de libérateurs d'ions négatifs (702) sont parallèles l'une à l'autre et espacées à une certaine distance,
dans lequel le générateur de plasma comprend des dépressions (705) dans la surface supérieure du boîtier (706), dans lequel la matrice de libérateurs d'ions positifs (701) comprenant la pluralité de libérateurs d'ions positifs (7011) et la matrice de libérateurs d'ions négatifs (702) comprenant la pluralité de libérateurs d'ions négatifs (7021) sont respectivement disposées dans les dépressions (705) et
dans lequel le générateur de plasma comprend une alimentation électrique ou une interface d'alimentation (703) fournie dans le boîtier (706), dans lequel l'alimentation électrique ou l'interface d'alimentation (703) comprend une électrode positive connectée à la matrice de libérateurs d'ions positifs (701) et une électrode négative connectée à la matrice de libérateurs d'ions négatifs (702).

2. Le générateur de plasma selon la revendication 1, dans lequel
les libérateurs d'ions positifs (7011) comprennent chacun un groupe de fibres conductrices micro/nano; et
les libérateurs d'ions négatifs (7021) comprennent chacun un groupe de fibres conductrices micro/nano.

3. Le générateur de plasma selon la revendication 2, dans lequel le groupe de fibres conductrices micro/nano comprend au moins un des éléments suivants:
une ou plusieurs d'une fibre de carbone, une fibre de graphite, une fibre métallique, un filament de tungstène court, du polypropylène dopé avec des fibres de carbone et un filament de polyéthylène;
une micro/nanofibre ayant un nombre dans une plage comprise entre 1 000 et 100 000; ou
une micro/nanofibre ayant un diamètre dans une plage comprise entre 10 nm et 100 µm.

4. Le générateur de plasma selon la revendication 1, dans lequel
la matrice de libérateurs d'ions positifs (701) comprend une matrice de libérateurs d'ions positifs unidimensionnelle (1D), bidimensionnelle (2D) ou tridimensionnelle (3D); ou
la matrice de libérateurs d'ions négatifs (702) comprend une matrice de libérateurs d'ions négatifs 1D, 2D ou 3D.

5. Le générateur de plasma selon la revendication 1, dans lequel
la matrice de libérateurs d'ions positifs (701) comprend une ou plusieurs des configurations suivantes: une matrice linéaire, une matrice en arc, une matrice en ligne de pliage, une matrice rectangulaire, une matrice circulaire, une matrice polygonale, une matrice de surface courbe et une matrice sphérique; ou
la matrice de libérateurs d'ions négatifs (702) comprend une ou plusieurs des configurations suivantes: une matrice linéaire, une matrice en arc, une matrice en ligne de pliage, une matrice rectangulaire, une matrice circulaire, une matrice polygonale, une matrice de surface courbe et une matrice sphérique.

6. Le générateur de plasma selon la revendication 1, dans lequel la matrice de libérateurs d'ions positifs (701) et la matrice de libérateurs d'ions négatifs (702) sont disposées dans au moins une des configurations suivantes:
une disposition côte à côte, une disposition alternée, une disposition échelonnée, une disposition angulaire, une disposition opposée, une disposition inversée ou une disposition empilée.

7. Le générateur de plasma selon la revendication 1, comprenant en outre une base (404, 504, 604) configurée pour supporter la matrice de libérateurs d'ions positifs (401, 501, 601) ou la matrice de libérateurs d'ions négatifs (402, 502, 602) et pour conduire l'électricité à la matrice de libérateurs d'ions positifs (401, 501, 601) ou à la matrice de libérateurs d'ions négatifs (402, 502, 602).

8. Un système de traitement par plasma, comprenant:
au moins un générateur de plasma selon l'une des revendications 1 à 7; et
une zone de traitement par plasma (420, 820, 920, 1020, 1120), dans lequel la matrice de libérateurs d'ions positifs (401, 801, 901, 1001, 1101) est configurée pour libérer les ions positifs dans la zone de traitement par plasma (420, 820, 920, 1020, 1120), et la matrice de libérateurs d'ions négatifs (402, 802, 902, 1002, 1102) est configurée pour libérer les ions négatifs dans la zone de traitement par plasma (420, 820, 920, 1020, 1120).

9. Le système de traitement par plasma selon la revendication 8, comprenant en outre:
un canal de gaz (870, 1070, 1170) comprenant une entrée de gaz (811, 1011, 1111) et une sortie de gaz (812, 1012, 1112), dans lequel au moins une partie de la zone de traitement par plasma (820, 1020, 1120) est située dans le canal de gaz (870, 1070, 1170); et
un dispositif d'entraînement de gaz (830, 1030, 1130) prévu à l'entrée de gaz (811, 1011, 1111), à la sortie de gaz (812, 1012, 1112) ou dans le canal de gaz (870, 1070, 1170), et configuré pour entraîner un gaz à entrer dans la zone de traitement par plasma (820, 1020, 1120).

10. Le système de traitement par plasma selon la revendication 9, dans lequel le ou les générateurs de plasma sont prévus dans le canal de gaz (870, 1070, 1170) ou communiquent avec le canal de gaz (870, 1070, 1170),
le système de traitement par plasma comprend en outre un boîtier (810, 1010, 1110), dans lequel le boîtier (810, 1010, 1110) définit le canal de gaz (870, 1070, 1170), la matrice de libérateurs d'ions positifs (801, 1001, 1101) est prévue dans le boîtier (810, 1010, 1110) et sur un côté du canal de gaz (870, 1070, 1170), et la matrice de libérateurs d'ions négatifs (802, 1002, 1102) est prévue dans le boîtier (810, 1010, 1110) et sur l'autre côté du canal de gaz (870, 1070, 1170) opposé à la matrice de libérateurs d'ions positifs (801, 1001, 1101).

11. Le système de traitement par plasma selon la revendication 8, comprenant en outre au moins un des éléments suivants:
au moins un filtre (1140) prévu à une entrée de gaz (1111), dans un canal de gaz (1170) ou à une sortie de gaz (1112);
au moins un collecteur de poussière (1160) prévu en aval du générateur de plasma; ou
un dispositif de traitement chimique (1150) configuré pour effectuer un traitement chimique sur un gaz dans le canal de gaz (1170).

12. Le système de traitement par plasma selon la revendication 8, dans lequel la zone de traitement par plasma (420, 820, 920, 1020, 1120) présente une concentration ionique moyenne d'au moins 10⁷/cm³.
